# EUROPÄISCHE PATENTSCHRIFT

(11) **EP 4 014 062 B1**
(45) Veröffentlichungstag und Bekanntmachung des Hinweises auf die Patenterteilung: **31.01.2024**
(21) Anmeldenummer: 20776110.7
(22) Anmeldetag: 18.09.2020
(51) Int. Cl.: G01S 5/00

(54) **VERFAHREN ZUM BEREITSTELLEN EINER AKTUELLEN LOKALEN UMGEBUNGSZUSTANDSKARTE FÜR EIN KRAFTFAHRZEUG SOWIE KRAFTFAHRZEUG ZUM DURCHFÜHREN EINES DERARTIGEN VERFAHRENS**
METHOD FOR PROVIDING A CURRENT LOCAL ENVIRONMENT STATUS MAP FOR A MOTOR VEHICLE, AND MOTOR VEHICLE FOR CARRYING OUT A METHOD OF THIS KIND
PROCÉDÉ POUR FOURNIR UNE CARTE D'ÉTAT D'ENVIRONNEMENT LOCALE INSTANTANÉE POUR UN VÉHICULE À MOTEUR ET VÉHICULE À MOTEUR POUR METTRE EN OEUVRE LEDIT PROCÉDÉ

(30) Priorität: 01.10.2019 DE 102019215099
(43) Veröffentlichungstag der Anmeldung: 22.06.2022
(73) Patentinhaber: Audi AG, 85045 Ingolstadt (DE)
(72) Erfinder: VOIGT, Christoph, 85092 Kösching (DE); HEHN, Thorsten, 85055 Ingolstadt (DE)
(74) Vertreter: Hofstetter, Schurack & Partner
(86) Internationale Anmeldenummer: PCT/EP2020/076130
(87) Internationale Veröffentlichungsnummer: WO 2021/063707

(56) Entgegenhaltungen:
- WO-A1-2019/031851
- WO-A1-2020/104551
- DE-A1-102017 217 297
- US-A1- 2004 073 361
- US-A1- 2010 198 513
- US-A1- 2017 025 017
- US-A1- 2020 183 389
- US-A1- 2020 256 681
- "Intelligent Transport Systems (ITS); Vehicular Communications; Basic Set of Applications; Local Dynamic Map (LDM); Rationale for and guidance on standardization", , 30. Juni 2015 (2015-06-30), XP002801218, Gefunden im Internet: URL:https://www.etsi.org/deliver/etsi_tr/1 02800_102899/102863/01.01.01_60/tr_102863v 010101p.pdf [gefunden am 2020-11-25]

## Beschreibung

Die Erfindung betrifft ein Verfahren zum Bereitstellen einer aktuellen lokalen Umgebungszustandskarte für ein Kraftfahrzeug sowie ein System, das dazu ausgebildet ist, ein derartiges Verfahren durchzuführen. Außerdem betrifft die Erfindung ein Kraftfahrzeug und ein System, mittels derer eine derartige aktuelle lokale Umgebungszustandskarte jeweils bereitgestellt wird.

Heutzutage sind im Straßenverkehr bereits zahlreiche Kraftfahrzeuge mittels einer jeweiligen Fahrzeug-zu-Fahrzeug-Kommunikationsverbindung miteinander verknüpft, über die eine elektronische Kommunikation zwischen den einzelnen Kraftahrzeugen möglich ist. Eine derartige Kommunikation zwischen einzelnen Kraftfahrzeugen wird oftmals als Vehicle-to-Vehicle (V2V)-Kommunikation bezeichnet und stellt eine Form einer Verkehrsvernetzung, die oftmals als Vehicle-to-everything (V2X)-Kommunikation bezeichnet wird, da.

Über die jeweilige Fahrzeug-zu-Fahrzeug-Kommunikationsverbindung empfängt beispielsweise ein Kraftfahrzeug, eine Statusmitteilung von zumindest einem anderen Kraftfahrzeug in einer Umgebung des Kraftfahrzeugs, wobei die Statusmitteilung Daten umfasst, die eine aktuelle Position, Geschwindigkeit, Fahrtrichtung sowie gegebenenfalls weitere fahrrelevante Parameter des anderen Kraftfahrzeugs beschreiben. Mithilfe der auf diese Art von dem zumindest einen anderen Kraftfahrzeug empfangenen Statusmitteilung kann das Kraftfahrzeug in Kombination mit einer Eigenstatusmitteilung, die eine eigene Fahrsituation des Kraftfahrzeugs beschreibende Daten umfasst, eine Fahrzeugumgebungskarte erzeugen, in der sowohl eine Eigenposition als auch die aktuelle Position des zumindest einen anderen Kraftfahrzeugs eingetragen ist, dessen Statusmitteilung empfangen wurde. Basierend auf der erzeugten Fahrzeugumgebungskarte kann beispielsweise eine Fahrfunktion zum zumindest teilautonomen Fahren des Kraftfahrzeugs in ihrer Funktionalität unterstützt werden. Die Fahrzeugumgebungskarte wird hierbei typischerweise zyklisch aktualisiert und dabei basierend auf der zumindest einen aktuell vorliegenden mittels Fahrzeug-zu-Fahrzeug-Kommunikation übermittelten Statusmitteilung an eine aktuelle Verkehrssituation in der Umgebung des Kraftfahrzeugs angepasst.

In diesem Zusammenhang zeigt die DE 10 2008 036 131 A1 ein Verfahren und eine Vorrichtung zum Erkennen einer Verkehrssituation in einer Fahrzeugumgebung eines Fahrzeugs. Um auf einfache Weise Informationen über anderen Fahrzeuge in der Fahrzeugumgebung zu erhalten ist es hierbei vorgesehen, dass fahrdynamische Daten der anderen Fahrzeuge durch Fahrzeug-zu-Fahrzeug-Kommunikation von dem Fahrzeug empfangen werden. Diese Daten werden daraufhin zu einer fahrdynamischen Verkehrssituationskarte zusammengefasst.

In der DE 10 2017 210 037 A1 ist ein Verfahren zur Kollisionsvermeidung bei einem Ausparkmanöver gezeigt. Hierbei erfolgt unter anderem ein Fahrzeug-zu-Fahrzeug-Datenaustausch, der dazu dient, eine Position eines detektierten Fahrzeugs auf einer elektronischen Karte zu überprüfen.

Die DE 100 37 572 A1 zeigt ein Verfahren zur Übertragung einer Route und eines Standorts eines Einsatzfahrzeugs zu Kraftfahrzeugen. Hiermit soll einem Fahrer in einem der Kraftfahrzeuge frühzeitig eine Vorbeifahrt eines Einsatzfahrzeuges signalisiert werden. Mittels digitaler Funksignale wird ein Standort sowie eine Route des Einsatzfahrzeuges an die Kraftfahrzeuge übertragen.

Die DE 10 2009 017 731 A1 beschreibt eine Vorrichtung zum Erstellen und Speichern einer digitalen Karte für ein Transportmittel auf Basis von Umfeldsensoren, Fahrzeug-zu-X-Kommunikation und Satellitennavigationssystemen, ohne dass hierfür Navigationskartendaten verwendet werden.

Die DE 10 2016 205 543 A1 beschreibt einen Austausch von digitalen Kartendaten zwischen mehreren Fahrzeugen.

Die US 2010/0198513 A1 zeigt ein Fahrzeugerkennungssystem zur Überwachung entfernter Fahrzeuge relativ zu einem Host-Fahrzeug. Es wird eine Sensorobjektdatenkarte und eine Fahrzeug-zu-Fahrzeug-Objektdatenkarte erzeugt und die erzeugten Karten zusammengefügt, um eine kumulative Objektdatenkarte zu erzeugen. Auf Basis der kumulativen Objektdatenkarte kann eine relative Position der entfernten Fahrzeuge zum Host-Fahrzeug abgeschätzt werden.

Die Veröffentlichung "Intelligent Transport Systems (ITS); Vehicular Commu nications; Basic Set of Applications; Local Dynamic Map (LDM);Rationale for and guidance on standardization" aus ETSI TR 102 863 V1.1.1 von Juni 2011 bietet einen Überblick über die Normierung lokaler dynamischer Karten auf der Grundlage einer Analyse des Bedarfs an Normen für intelligente Verkehrssysteme.

Es ist die Aufgabe der Erfindung, eine Lösung bereitzustellen, mittels derer eine verbesserte Fahrzeugumgebungskarte für ein Kraftfahrzeug bereitgestellt werden kann.

Diese Aufgabe wird durch die Gegenstände der unabhängigen Patentansprüche gelöst. Vorteilhafte Ausgestaltungen mit zweckmäßigen und nicht-trivialen Weiterbildungen der Erfindung sind in den abhängigen Ansprüchen, der folgenden Beschreibung und den Figuren angegeben.

Der Erfindung liegt die Erkenntnis zugrunde, dass einem Kraftfahrzeug heutzutage typischerweise Sensordaten von einer Sensorvorrichtung des Kraftfahrzeugs vorliegen, die Informationen über zumindest ein anderes Kraftfahrzeug in einer Umgebung des Kraftfahrzeugs enthalten können. Die Sensordaten werden beispielsweise mittels einer Kameraeinrichtung, einem Radargerät, einem Lidar-Gerät (Lidar für Light Detection and Ranging) oder einem anderen Außensensor des Kraftfahrzeugs erzeugt. Das Kraftfahrzeug kann durch Auswerten der Sensordaten eine Verkehrssituation in seiner Umgebung erfassen und beispielsweise mittels einer Kombination mit eine eigene Fahrsituation des Kraftfahrzeugs beschreibenden Daten eine Fahrzeugumgebungskarte erzeugen. Außerdem liegen dem Kraftfahrzeug oftmals jeweilige Statusmitteilungen anderer Kraftfahrzeuge in seiner Umgebung vor, die über eine Fahrzeug-zu-Fahrzeug-Kommunikation vom Kraftfahrzeug empfangen werden. Diese jeweiligen Statusmitteilungen enthalten Informationen über eine eigene aktuelle Position, Geschwindigkeit, Fahrtrichtung sowie gegebenenfalls weitere fahrrelevante Parameter des jeweiligen anderen Kraftfahrzeugs. Jedes einzelne Kraftfahrzeug kann sich dann basierend auf seinen Eigenfahrzeugdaten, den eigenen Sensordaten der Sensorvorrichtung des Kraftfahrzeugs und gegebenenfalls zudem unter Berücksichtigung der empfangenen Statusmitteilungen der anderen Kraftfahrzeuge eine Fahrzeugumgebungskarte erzeugen.

Die erzeugte Fahrzeugumgebungskarte wird dann im Kraftfahrzeug selbst verwendet, zum Beispiel zum Durchführen einer zumindest teilautonomen Fahrfunktion. Die erzeugte Fahrzeugumgebungskarte wird jedoch nicht mit anderen Kraftfahrzeugen in der Umgebung des Kraftfahrzeugs über Fahrzeug-zu-Fahrzeug-Kommunikation geteilt. Allerdings ist die erzeugte Fahrzeugumgebungskarte und insbesondere eine Zuverlässigkeit und Qualität der erzeugten Fahrzeugumgebungskarte von Kraftfahrzeug zu Kraftfahrzeug verschieden. Denn die einzelnen anderen Kraftfahrzeuge in der Umgebung des Kraftfahrzeugs weisen zum Beispiel typischerweise jeweils eine unterschiedliche Sensorvorrichtung auf, sodass sich die in den jeweiligen Kraftfahrzeugen erzeugten Fahrzeugumgebungskarten deutlich voneinander unterscheiden können.

Es wäre daher sinnvoll, zum Erzeugen einer verbesserten Fahrzeugumgebungskarte die erzeugte Fahrzeugumgebungskarte mit anderen Kraftfahrzeugen zu teilen, sodass das Kraftfahrzeug basierend auf der eigenen erzeugten Fahrzeugumgebungskarte und den empfangenen Fahrzeugumgebungskarten die verbesserte Fahrzeugumgebungskarte erzeugen kann.

Das erfindungsgemäße Verfahren zum Bereitstellen einer aktuellen lokalen Umgebungszustandskarte für ein Kraftfahrzeug ist dazu ausgebildet, eine verbesserte Fahrzeugumgebungskarte bereitzustellen. Die verbesserte Fahrzeugumgebungskarte im Sinne der Erfindung wird als aktuelle lokale Umgebungszustandskarte bezeichnet. Das erfindungsgemäße Verfahren umfasst folgende Schritte, die jeweils in einem bestimmten Kraftfahrzeug durchgeführt werden: Zunächst erfolgt ein Erzeugen von einen aktuellen positionsrelevanten Fahrzeugparameter des Kraftfahrzeugs beschreibenden Eigenfahrsituationsdaten. Dies erfolgt durch Auswerten von Fahrzeugdaten des Kraftfahrzeugs. Als Fahrzeugdaten des Kraftfahrzeugs liegen beispielsweise eine aktuelle Position, eine Geschwindigkeit, eine Fahrtrichtung, eine Beschleunigung, eine Gierrate, ein Lenkwinkel sowie weitere ein aktuelles Fahrverhalten des Kraftfahrzeugs beschreibende Parameter vor. Hierbei werden jedoch nur die Fahrzeugdaten berücksichtigt, die einen aktuellen positionsrelevanten Fahrzeugparameter des Kraftfahrzeugs beschreiben, das heißt die Bezug zum aktuellen Fahrverhalten sowie zu einem Aufenthaltsort des Kraftfahrzeugs umfassen. Diese Daten werden typischerweise jeweils mittels einer dazu ausgebildeten Erfassungseinrichtung des Kraftfahrzeugs erfasst und zum Beispiel in einer zentralen Steuereinheit des Kraftfahrzeugs bereitgestellt. Als Erfassungseinrichtung kann zum Beispiel ein Drehzahlmesser zum Erfassen der aktuellen Geschwindigkeit und/oder eine Positionsbestimmungseinheit eines Navigationssystems zum Ermitteln von Koordinaten der aktuellen Position des Kraftfahrzeugs basierend auf Daten eines globalen Navigationssatellitensystems (GNSS für global navigation satellite system), wie zum Beispiel des globalen Positionsbestimmungssystems GPS, im Kraftfahrzeug vorgesehen sein. Anhand der Auswertung der Fahrzeugdaten können also die Eigenfahrsituationsdaten des Kraftfahrzeugs erzeugt werden, die letztendlich einen aktuellen positionsabhängigen Fahrzustand des Kraftfahrzeugs beschreiben. Die Eigenfahrsituationsdaten entsprechen somit zumindest teilweise den Daten einer typischen Statusmitteilung und/oder zumindest einer Teilmitteilung der typischen Statusmitteilung, die herkömmliche Kraftfahrzeugen mittels Fahrzeug-zu-Fahrzeug-Kommunikation an andere Kraftfahrzeuge übermitteln.

In einem weiteren Verfahrensschritt erfolgt ein Erzeugen von Umgebungssituationsdaten durch Auswerten von Sensordaten einer Sensorvorrichtung des Kraftfahrzeugs. Als Sensorvorrichtung des Kraftfahrzeugs kann bevorzugt auf zumindest einen eine Umgebung des Kraftfahrzeugs erfassenden Außensensor zurückgegriffen werden. Ein derartiger Außensensor ist beispielsweise eine Kameraeinrichtung, wie zum Beispiel eine Frontkamera, eine Heckkamera und/oder jeweilige Seitenkameras eines Kraftfahrzeugs, ein Radargerät und/oder ein Lidar-Gerät. Die Sensorvorrichtung kann gegebenenfalls ebenfalls dazu ausgebildet sein, die oben beschriebenen Fahrzeugdaten des Kraftfahrzeugs bereitzustellen, also zum Beispiel ebenfalls auf Daten des GNSS zurückgreifen.

Die Umgebungssituationsdaten beschreiben zumindest eine aktuelle Relativanordnung zumindest eines in einer vorgegebenen Umgebung des Kraftfahrzeugs angeordneten anderen Kraftfahrzeugs zum Kraftfahrzeug selbst. Die Umgebungssituationsdaten umfassen somit letztendlich Positionsdaten von in der Umgebung des Kraftfahrzeugs fahrenden und/oder stehenden weiteren Verkehrsteilnehmern. Zumindest die aktuellen Positionen der anderen Kraftfahrzeuge relativ zur aktuellen Position des Kraftfahrzeugs sind hierbei in Form der aktuellen Relativanordnungen angegeben. Die Sensorvorrichtung des Kraftfahrzeugs ist also dazu ausgebildet, eine Umgebung des Kraftfahrzeugs zu überwachen und dort aktuell angeordnete weitere Verkehrsteilnehmer zu erfassen sowie deren Relativanordnung zum Kraftfahrzeug selbst zu ermitteln und in Form der Umgebungssituationsdaten bereitzustellen. Die Umgebungssituationsdaten können außerdem Informationen über die Umgebung des Kraftfahrzeugs an sich umfassen, das heißt beispielsweise Informationen über einen Straßenverlauf, Objekte in der Umgebung des Kraftfahrzeugs, Personen in der Umgebung des Kraftfahrzeugs, aktuell herrschende Lichtverhältnisse, aktuell herrschende Wetterverhältnisse und/oder einen Verkehrsflussinformationen umfassen. Hierfür werden sie Sensordaten der Sensorvorrichtung unter Anwendung entsprechender Auswertealgorithmen zum Beispiel mittels einer dazu ausgebildeten Auswerteeinrichtung des Kraftfahrzeugs zu den entsprechenden Umgebungssituationsdaten ausgewertet.

In einem weiteren Verfahrensschritt erfolgt ein Auswerten der Eigenfahrsituationsdaten und der Umgebungssituationsdaten zum Erzeugen einer Fahrzeugumgebungskarte. Die Fahrzeugumgebungskarte beschreibt eine aktuelle lokale Verkehrslage in der vorgegebenen Umgebung des Kraftfahrzeugs. Das Kraftfahrzeug selbst ist also dazu ausgebildet, basierend auf seinen eigenen Fahrzeugdaten sowie den Sensordaten seiner Sensorvorrichtung die aktuelle lokale Verkehrslage in Form der Fahrzeugumgebungskarte zu beschreiben. Die Fahrzeugumgebungskarte umfasst dabei zumindest die Relativanordnung des in der Umgebung des Kraftfahrzeugs angeordneten zumindest einen anderen Kraftfahrzeuge zum Kraftfahrzeug selbst sowie den aktuellen positionsrelevanten Fahrzeugparameter des Kraftfahrzeugs. Befindet sich das Kraftfahrzeug beispielsweise auf einer innerstädtischen zweispurigen Straße, können mithilfe der Sensorvorrichtung des Kraftfahrzeugs drei weitere Kraftfahrzeuge in der Umgebung des Kraftfahrzeugs erfasst werden. Deren jeweilige Anordnungen relativ zum Kraftfahrzeug werden dann in der Fahrzeugumgebungskarte eingetragen, sodass dieser zu entnehmen ist, wo sich das Kraftfahrzeug relativ zu den detektierten drei anderen Kraftfahrzeuge in der Umgebung des Kraftfahrzeugs aktuell befinden. Mithilfe von exakten Positionsdaten als Fahrzeugdaten, die beispielsweise mithilfe der Daten des GNSS bestimmt wurden, kann sogar eine tatsächliche Verortung des Kraftfahrzeugs sowie der drei anderen Kraftfahrzeuge auf einer Landkarte der Umgebung erfolgen. Die Landkarte wird hierfür beispielsweise vom Navigationssystem des Kraftfahrzeugs bereitgestellt. In diesem Fall umfasst die Fahrzeugumgebungskarte beispielsweise genaue jeweilige Koordinaten des Kraftfahrzeugs sowie der drei anderen Kraftfahrzeuge.

Ein weiterer Verfahrensschritt umfasst ein Empfangen von zumindest einer weiteren Fahrzeugumgebungskarte von dem jeweiligen zumindest einen anderen Kraftfahrzeug in der Umgebung des Kraftfahrzeugs. Die einzelnen Kraftfahrzeuge sind also dazu ausgebildet, die von ihnen erzeugte jeweilige Fahrzeugumgebungskarte an Kraftfahrzeuge in der Umgebung zu übermitteln. Diese Übermittlung erfolgt hierbei mittels einer Fahrzeug-zu-Fahrzeug-Kommunikation. Die entsprechende Kommunikationsverbindung zwischen einzelnen Kraftfahrzeugen ist beispielsweise über ein mobiles Datennetzwerk, beispielsweise mittels des Mobilfunkstandards Long Term Evolution (LTE) oder Fifth Generation (5G), ein drahtloses lokales Netzwerk (WLAN für Wireless Local Area Network) oder ein Nahbereichskommunikationsnetzwerk (DSRC für Dedicated Short Range Communication), beispielsweise basierend auf im Kraftfahrzeug verbauten Transpondern mit jeweils kleiner Kommunikationszone, aufgebaut. Hierdurch ist es möglich, dass das Kraftfahrzeug beispielsweise von den drei in seiner Umgebung fahrenden anderen Kraftfahrzeugen jeweils eine Fahrzeugumgebungskarte empfängt.

Daraufhin erfolgt ein Kombinieren der zumindest einen empfangenen Fahrzeugumgebungskarte mit der erzeugten Fahrzeugumgebungskarte unter Anwendung eines Kartendatenbewertungskriteriums. Dies erfolgt zum Erzeugen der aktuellen lokalen Umgebungszustandskarte für das Kraftfahrzeug. Es werden also alle empfangenen Fahrzeugumgebungskarten mit der erzeugten Fahrzeugumgebungskarte verglichen, sodass beispielsweise zusätzliche Informationen, die beispielsweise einem vorausfahrenden anderen Kraftfahrzeug über zusätzliche andere Kraftfahrzeuge vorliegen, anhand dieser entsprechenden empfangenen Fahrzeugumgebungskarte nun auch dem Kraftfahrzeug, das dieses zusätzliche Kraftfahrzeug selbst gar nicht erfasst und folglich nicht auf der erzeugten Fahrzeugumgebungskarte eingetragen hat, vorliegen. Hierdurch kann beispielsweise ein zusätzliches viertes Kraftfahrzeug, das von der Sensorvorrichtung des Kraftfahrzeugs selbst nicht näher erfasst wurde, jedoch von der Sensorvorrichtung eines der anderen Kraftfahrzeuge erfasst wurde, in die aktuelle lokale Umgebungszustandskarte eingetragen werden. Unter welchen Bedingungen und Vorschriften Informationen der empfangenen Fahrzeugumgebungskarten zusätzlich oder alternativ zu den Daten der erzeugten Fahrzeugumgebungskarten in die aktuelle lokale Umgebungszustandskarte übernommen werden, ist hierbei mithilfe des Kartendatenbewertungskriteriums vorgegeben. Dieses Kartendatenbewertungskriterium enthält daher beispielsweise Vorschriften zu einer Priorisierung von einzelnen Datenpaketen der empfangenen Fahrzeugumgebungskarte und/oder der erzeugten Fahrzeugumgebungskarte, anhand derer festgelegt wird, welche Daten letztendlich zum Erzeugen der aktuellen lokalen Verkehrsleitkarte berücksichtigt werden und welche nicht.

Abschließend wird die erzeugte aktuelle lokale Umgebungszustandskarte im Kraftfahrzeug bereitgestellt. Die erzeugte aktuelle Umgebungszustandskarte liegt also zumindest dem Kraftfahrzeug selbst vor und kann von diesem beispielsweise bei einer Durchführung einer Fahrerassistenzfunktion zum zumindest teilautonomen Fahren, wie beispielsweise einem Spurhalteassistenten, berücksichtigt werden. Dadurch, dass also nicht nur jeweilige Eigenfahrsituationsdaten zwischen Kraftfahrzeugen ausgetauscht wurden, wie es üblicherweise heutzutage der Fall ist, sondern dadurch, dass bereits die von einem jeweiligen Kraftfahrzeug erzeugte Fahrzeugumgebungskarte mit anderen Kraftfahrzeugen geteilt wird, kann erreicht werden, dass eine verbesserte aktuelle lokale Umgebungszustandskarte für das Kraftfahrzeug bereitgestellt wird. Dies hat den großen Vorteil, dass das Kraftfahrzeug auf eine größere Datenmenge zugreifen kann, sodass beispielsweise ein größeres Wahrnehmungsumfeld mithilfe der aktuellen lokalen Umgebungszustandskarte für das Kraftfahrzeug bereitgestellt wird. Vorteilhafterweise erfolgt außerdem ein Kombinieren der von mehreren Kraftfahrzeugen bereitgestellten Informationen. Denn durch das miteinander Teilen der jeweiligen Fahrzeugumgebungskarte empfängt das Kraftfahrzeug zusätzlich zu seinen eigenen und somit intrinsisch vorliegenden Informationen mittels der Fahrzeug-zu-Fahrzeug-Kommunikation auch zahlreiche extrinsische Informationen, die es nicht selbst erfasst, sondern die von anderen Kraftfahrzeugen bereitgestellt werden. Letztendlich tauschen Kraftfahrzeuge nämlich nicht mehr nur Informationen über sich selbst miteinander aus, sondern ihre erzeugte Fahrzeugumgebungskarte. Hierdurch wird jedes empfangene Kraftfahrzeug in die Situation gebracht, dass es beispielsweise von einer modernen Ausstattung eines Kraftfahrzeugs in seiner Umgebung profitieren kann, da beispielsweise besonders zuverlässige für die Erzeugung der Fahrzeugumgebungskarte dieses Kraftfahrzeugs gemessene Sensordaten durch das Austauschen der Fahrzeugumgebungskarten auch den anderen Kraftfahrzeugen, die beispielsweise über eine verglichen dazu schlechtere Sensorvorrichtung verfügen, bereitgestellt werden. Hierdurch kann das Kraftfahrzeug somit eine verbesserte Fahrzeugumgebungskarte in Form der aktuellen lokalen Umgebungszustandskarte bereitstellen.

Erfindungsgemäß ist es vorgesehen, dass bei der Anwendung des Kartendatenbewertungskriteriums überprüft wird, ob ein jeweiliges von der empfangenen Fahrzeugumgebungskarte beschriebenes Kraftfahrzeug ebenfalls von der erzeugten Fahrzeugumgebungskarte beschrieben wird. Es wird also überprüft, ob beispielsweise alle drei von dem Kraftfahrzeug erfassten anderen Kraftfahrzeuge auch in den empfangenen Fahrzeugumgebungskarten vorhanden sind. Es wird überprüft, ob beispielsweise in der empfangenen Fahrzeugumgebungskarte beispielsweise ein Kraftfahrzeug eingetragen ist, das in der erzeugten Fahrzeugumgebungskarte noch nicht beschrieben wird. Es werden also letztendlich Unterschiede zwischen der jeweiligen empfangenen Fahrzeugumgebungskarte und der eigenen erzeugten Fahrzeugumgebungskarte gesucht und festgestellt. Falls nun in der jeweiligen empfangenen Fahrzeugumgebungskarte zumindest ein zusätzliches Kraftfahrzeug beschrieben wird, das in der eigenen Fahrzeugumgebungskarte fehlt, wird das zumindest eine zusätzliche Kraftfahrzeug in die erzeugte aktuelle lokale Umgebungszustandskarte aufgenommen. Wird also beispielsweise festgestellt, wenn eine von beispielsweise drei empfangenen Fahrzeugumgebungskarten zumindest ein zusätzliches Kraftfahrzeug beschreibt, das das Kraftfahrzeug selbst mithilfe seiner Umgebungssituationsdaten nicht in seiner Umgebung verortet hat. Das zusätzliche Kraftfahrzeug wird daraufhin in die aktuelle lokale Umgebungszustandskarte eingetragen.

Hierdurch verbessert das Kraftfahrzeug sein Wahrnehmungsumfeld und letztendlich die aktuelle lokale Umgebungszustandskarte. Außerdem können hierdurch Kraftfahrzeuge wahrgenommen werden, die außerhalb einer Reichweite der Fahrzeug-zu-Fahrzeug-Kommunikation liegen. Denn sowohl ein Erfassungsbereich der Sensorvorrichtung des Kraftfahrzeugs als auch ein Umgebungsradius, aus dem zum Beispiel Eigenfahrsituationsdaten von einem anderen Kraftfahrzeug empfangen werden, ist begrenzt, weshalb gegebenenfalls nicht alle potentiell für das Fahrverhalten des Kraftfahrzeugs relevanten anderen Kraftfahrzeuge in der Umgebung des Kraftfahrzeugs vom Kraftfahrzeug selbst erfasst werden können. Es ist jedoch möglich, dass beispielsweise ein in einer vorgegebenen Distanz vor dem Kraftfahrzeug fahrendes andere Kraftfahrzeug den weiteren Verkehrsteilnehmer, das heißt das zusätzliche Kraftfahrzeug, registriert, beispielsweise da es das zusätzliche Kraftfahrzeug mithilfe seiner eigenen Sensorvorrichtung erfasst und/oder von diesem entsprechende Eigenfahrsituationsdaten empfängt. Insbesondere hinsichtlich einer Funktion von einem zumindest teilautonom das Kraftfahrzeug ansteuernden Fahrerassistenzsystemen kann es vorteilhaft sein, ein vergrößertes Wahrnehmungsumfeld für das Kraftfahrzeug bereitzustellen, als es sich das Kraftfahrzeug mithilfe der erzeugten Fahrzeugumgebungskarte selbst erzeugen kann, um beispielsweise vorausschauend auf potentielle zukünftige Verkehrssituationen reagieren zu können.

Die Erfindung sieht vor, dass die Eigenfahrsituationsdaten und/oder die Umgebungssituationsdaten jeweils mehrere Datenpakete umfassen. Jedem der mehreren Datenpakete ist ein Zuverlässigkeitswert zugeordnet, der beschreibt, wie zuverlässig Daten des Datenpakets sind. Die von dem Kraftfahrzeug erzeugten Daten, das heißt die Eigenfahrsituationsdaten und/oder die Umgebungssituationsdaten, weisen jeweils eine Genauigkeitsangabe auf, die in Form des Zuverlässigkeitswerts gegeben ist. Dieser wird jedoch bevorzugt nicht den Eigenfahrsituationsdaten oder den Umgebungssituationsdaten als Ganzes zugeordnet, sondern für ein jeweiliges Datenpaket bestimmt. Hierunter ist zu verstehen, dass beispielsweise eine Sensoreinheit der Sensorvorrichtung, bei der es sich beispielsweise um eine Frontkamera des Kraftfahrzeugs handelt, einen bestimmten Zuverlässigkeitswert zugeordnet bekommt, wohingegen die aktuelle Position des Kraftfahrzeugs, die mithilfe des Auswertens der Fahrzeugdaten zur Bestimmung der Eigenfahrsituationsdaten berücksichtigt wird, einen beispielsweise davon unterschiedlichen eigenen Zuverlässigkeitswert zugeordnet bekommt. Analog dazu weisen beispielsweise ein aktueller Geschwindigkeitswert, eine aktuelle Bestimmung der Fahrtrichtung, ein Radargerät des Kraftfahrzeugs, eine Heckkamera und/oder ein von einem Beschleunigungssensor des Kraftfahrzeugs bereitgestellter Beschleunigungswert jeweils einen eigenen Zuverlässigkeitswert auf. Wie genau der jeweilige vom Datenpaket erfasste Wert ist beziehungsweise die von dem jeweiligen Datenpaket gegebenenfalls umfassten mehreren Werte sind, wird also mithilfe des Zuverlässigkeitswerts spezifiziert und beziffert. Hierdurch wird auf einfache Art und Weise eine Bewertung der den Eigenfahrsituationsdaten und/oder den Umgebungssituationsdaten zugrunde liegenden Datenpakete ermöglicht, anhand derer eine Zuverlässigkeit einzelner Informationselemente der eigenen Fahrzeugumgebungskarte festgestellt werden kann. Das Kraftfahrzeug selbst kann somit einschätzen, wie zuverlässig und somit wie genau die einzelnen in seiner Fahrzeugumgebungskarte hinterlegten Angaben zur Umgebung des Kraftfahrzeugs im Einzelnen sind.

Erfindungsgemäß ist es nun vorgesehen, dass bei der Anwendung des Kartendatenbewertungskriteriums für jede empfangene Fahrzeugumgebungskarte überprüft wird, ob zumindest einem der empfangenen Fahrzeugumgebungskarten zugrunde gelegten Datenpaket ein höherer Zuverlässigkeitswert zugeordnet ist als einem entsprechenden Datenpaket der der eigenen Fahrzeugumgebungskarte zugrunde gelegten Eigenfahrsituationsdaten und/oder Umgebungssituationsdaten. Zusammen mit der empfangenen Fahrzeugumgebungskarte werden somit die jeweiligen Zuverlässigkeitswerte der einzelnen Datenpakete, auf denen die empfangene Fahrzeugumgebungskarte basiert, vom Kraftfahrzeug empfangen. Es kann dann festgestellt werden, ob beispielsweise eine aktuelle Position eines der anderen Kraftfahrzeuge in der Umgebung des Kraftfahrzeugs in der empfangenen Fahrzeugumgebungskarte eines anderen Kraftfahrzeugs näher spezifiziert ist als in der eigenen erzeugten Fahrzeugumgebungskarte.

Es kann also letztendlich für jedes einzelne Teilelement an Informationen, die letztendlich der aktuellen lokalen Umgebungszustandskarte zugrunde gelegt werden, das Datenpaket bestimmt werden, das den höchsten Zuverlässigkeitswert aufweist. Beim Erzeugen der aktuellen lokalen Umgebungszustandskarte für das Kraftfahrzeug wird nämlich nur das jeweilige Datenpaket der jeweils miteinander verglichenen Datenpakete berücksichtigt, dem der höchste Zuverlässigkeitswert zugeordnet ist. Die letztendlich erzeugte aktuelle lokale Umgebungszustandskarte basiert somit auf genau den Datenpaketen, die jeweils im Vergleich zu allen anderen entsprechenden vorliegenden Datenpaketen die höchsten und somit im Vergleich maximalen Zuverlässigkeitswerte aufweist. Hierdurch wird es möglich, dass beispielsweise niedrig ausgestattete Kraftfahrzeuge, die beispielsweise über eine ältere Sensorvorrichtung verfügen, durch die Sensorvorrichtung von moderner ausgestatteten Kraftfahrzeugen, die somit im Vergleich höher ausgestattet sind, profitieren können, da deren jeweilige Daten höhere Zuverlässigkeitswerte aufweisen und mithilfe des beschriebenen Abgleichs zwischen den einzelnen Zuverlässigkeitswerten letztendlich die Daten aus dem Datenpaket mit dem höchsten Zuverlässigkeitswert zum Erzeugen der aktuellen lokalen Umgebungszustandskarte sogar von dem Kraftfahrzeug mit der niedrigen Ausstattung verwendet werden. Hierdurch wird es für jedes Kraftfahrzeug möglich, eine im Vergleich zu seiner Fahrzeugumgebungskarte verbesserte aktuelle lokale Umgebungszustandskarte zu erzeugen.

Zu der Erfindung gehören auch Ausgestaltungsformen, durch die sich zusätzliche Vorteile ergeben.

In einer vorteilhaften Ausgestaltungsform ist es vorgesehen, dass zum Erzeugen der Umgebungssituationsdaten von zumindest einem anderen Kraftfahrzeug in der Umgebung des Kraftfahrzeugs empfangene Eigenfahrsituationsdaten des anderen Kraftfahrzeugs ausgewertet werden. Die Umgebungssituationsdaten basieren somit nicht nur auf den Sensordaten der Sensorvorrichtung des Kraftfahrzeugs selbst, sondern auch auf den Eigenfahrsituationsdaten, die jeweils aktuelle positionsrelevante Fahrzeugparameter eines Kraftfahrzeugs beschreiben und basierend auf den Fahrzeugdaten des jeweiligen Kraftfahrzeugs erzeugt wurden. Die einzelnen Kraftfahrzeuge in der Umgebung des Kraftfahrzeugs tauschen also miteinander nicht nur ihre jeweiligen erzeugten Fahrzeugumgebungskarten aus, sondern weiterhin bereits ihre jeweiligen Statusmitteilungen, das heißt ihrer jeweiligen Eigenfahrsituationsdaten. Basierend auf einer derartigen Sensorfusion, das heißt einer Kombination der jeweiligen empfangenen Eigenfahrsituationsdaten der anderen Kraftfahrzeuge mit den eigenen Sensordaten des Kraftfahrzeugs kann eine Genauigkeit der Umgebungssituationsdaten und somit letztendlich der erzeugten Fahrzeugumgebungskarte verbessert werden. Hierdurch wird also bereits die von jedem Kraftfahrzeug selbst erzeugte Fahrzeugumgebungskarte besonders zuverlässig und genau.

Eine zusätzliche Ausgestaltungsform der Erfindung sieht vor, dass, falls die jeweiligen miteinander verglichenen Datenpakete einen jeweiligen Zuverlässigkeitswert aufweisen, der in einem vorgegebenen Zuverlässigkeitswertbereich liegt, und die Daten der miteinander verglichenen Datenpakete jeweils zumindest mittelbar von einer vorgegebenen Sensoreinrichtung der jeweiligen Sensorvorrichtung des jeweiligen Kraftfahrzeugs bereitgestellt wurden, überprüft wird, ob die Daten der jeweiligen Datenpakete innerhalb eines vorgegebenen Abweichungsbereichs übereinstimmen. Für alle Sensordaten erfolgt somit immer dann, wenn diese einen zumindest ähnlichen Zuverlässigkeitswert aufweisen, der daher innerhalb des vorgegebenen Zuverlässigkeitswertebereichs liegt, ein Abgleich miteinander. Weist also das Kraftfahrzeug eine Frontkamera als vorgegebene Sensoreinrichtung seiner Sensorvorrichtung auf, wobei die Frontkamera einen bestimmten Zuverlässigkeitswert aufweist, und eines der anderen Kraftfahrzeuge weist ebenfalls eine Frontkamera als vorgegebene Sensoreinrichtung seiner Sensorvorrichtung auf, die zudem einen etwa gleichen Zuverlässigkeitswert aufweist, sodass beide Zuverlässigkeitswerte innerhalb des vorgegebenen Zuverlässigkeitswertbereichs liegen, werden die von der Frontkamera bereitgestellten Sensordaten des Kraftfahrzeugs mit den Sensordaten der Frontkamera des anderen Kraftfahrzeugs verglichen. Es werden also die Daten der jeweiligen Datenpakete, die jeweils von einer entsprechenden Sensoreinrichtung der jeweiligen Sensorvorrichtung bereitgestellt wurden, direkt auf mögliche Abweichungen zueinander untersucht. Falls die Daten der jeweiligen Datenpakete nicht innerhalb des vorgegebenen Abweichungsbereichs übereinstimmen, erfolgt eine Aktivierung einer Messgenauigkeitsüberprüfung für die vorgegebene Sensoreinrichtung des Kraftfahrzeugs. Stimmen also beispielsweise die Sensordaten der Fronkamera des Kraftfahrzeugs mit den Sensordaten der Frontkamera des anderen Kraftfahrzeugs innerhalb des vorgegebenen Abweichungsbereichs überein, der beispielsweise eine maximale prozentuale Abweichung von fünf Prozent der Sensordaten des anderen Kraftfahrzeugs bezogen auf die Sensordaten des Kraftfahrzeugs vorgibt, wird dies registriert und die jeweilige Sensoreinrichtung als ausreichend genau messend eingestuft. Kommt es jedoch zu einer größeren Abweichung, das heißt zu einer Abweichung, die nicht in den Abweichungsbereich fällt, weist dies auf eine Messungenauigkeit zumindest einer der Sensoreinrichtungen hin. Daher wird die Messgenauigkeitsüberprüfungsroutine für die vorgegebene Sensoreinrichtung, das heißt die Frontkamera, des Kraftfahrzeugs aktiviert.

Es wird daraufhin beispielsweise gemäß der Messgenauigkeitsüberprüfungsroutine überprüft, ob ein Messbereich der vorgegebenen Sensoreinrichtung beispielsweise verschoben wurde, zum Beispiel aufgrund von einer externen Krafteinwirkung auf die Sensoreinrichtung und/oder aufgrund von Verschmutzungen, wie beispielsweise einer Verschmutzung einer Kameralinse der Frontkamera des Kraftfahrzeugs. Die Messgenauigkeitsüberprüfungsroutine ist hierbei individuell für die vorgegebene Sensoreinrichtung vorgegeben. Die Messgenauigkeitsüberprüfungsroutine berücksichtigt daher zum Beispiel eine Positionierung der Sensoreinrichtung im Kraftfahrzeug. Die Messgenauigkeitsüberprüfungsroutine kann lediglich das Feststellen eines potentiellen Messfehlers und das Ausgeben einer entsprechenden Warnmeldung umfassen. Alternativ oder zusätzlich dazu kann die Messgenauigkeitsüberprüfungsroutine ein Verfahren für ein Reinigen, ein erneutes Kalibrieren und/oder eine andere Vorgehensvorschrift zum Überprüfen und gegebenenfalls Korrigieren des Messverhaltens der Sensoreinrichtung umfassen. Es wird also letztendlich möglich, dass basierend auf dem Vergleich der einzelnen Datenpakete, die das Kraftfahrzeug selbst bereitstellt sowie der Datenpakete, die dem Kraftfahrzeug von dem zumindest einen anderen Kraftfahrzeugen bereitgestellt werden, eine Funktionsweise der Sensorvorrichtung des Kraftfahrzeugs überprüft und gegebenenfalls sogar korrigiert werden kann. Hierdurch kann durch das Durchführen der Messgenauigkeitsüberprüfungsroutine die Zuverlässigkeit der Eigenfahrsituationsdaten sowie der Umgebungssituationsdaten des Kraftfahrzeugs verbessert werden.

Außerdem sieht eine weitere Ausgestaltungsform vor, dass zumindest eine Teilkarte der erzeugten Fahrzeugumgebungskarte an das zumindest eine andere Kraftfahrzeug in der Umgebung des Kraftfahrzeugs übermittelt wird. Der Teilkarte sind nur Daten von Datenpaketen zugrunde gelegt, deren jeweilige Zuverlässigkeitswert größer als ein vorgegebener Minimalzuverlässigkeitswert ist. Insbesondere dann, wenn eine hohe Kanalauslastung besteht, das heißt Fahrzeug-zu-Fahrzeug-Kommunikationsverbindungen zwischen mehreren Kraftfahrzeugen in der Umgebung aufgebaut und aufrecht erhalten werden, kann es sinnvoll sein, dass nicht die vollständige vom Kraftfahrzeug erzeugte Fahrzeugumgebungskarte an andere Kraftfahrzeug übermittelt wird, sondern nur die beschriebene Teilkarte. Diese Teilkarte beschreibt beispielsweise nur Kraftfahrzeuge in einer unmittelbaren Umgebung des Kraftfahrzeugs, beispielsweise das Kraftfahrzeug sowie zwei in unmittelbarer Nähe des Kraftfahrzeugs in Fahrtrichtung vor beziehungsweise neben dem Kraftfahrzeug fahrende andere Kraftfahrzeuge, wohingegen ein weiter entfernt fahrendes drittes Kraftfahrzeug, das beispielsweite in einem Abstand von 100 Meter hinter dem Kraftfahrzeug fährt, nicht mehr von der Teilkarte beschrieben wird. Hierbei wird angenommen, dass näher am Kraftfahrzeug angeordnete andere Kraftfahrzeuge mit einer größeren Zuverlässigkeit in der Fahrzeugumgebungskarte eingetragen werden als weiter entfernt zum Kraftfahrzeug angeordnete andere Kraftfahrzeuge. Diesem Vorgehen liegt daher insgesamt die Erkenntnis zugrunde, dass in der Regel nur für andere Kraftfahrzeuge in einem Teilbereich der Umgebung Datenpakete mit einem hohen Zuverlässigkeitswert zugrunde liegen, die potentiell für andere Kraftfahrzeuge aufgrund ihres jeweiligen hohen Zuverlässigkeitswert interessant sind. Ob Informationen der Fahrzeugumgebungskarte für das zumindest eine andere Kraftfahrzeug potentiell interessant sind, wird mithilfe des vorgegebenen Minimalzuverlässigkeitswerts festgestellt, der beispielsweise derart gewählt ist, dass all die Daten von Datenpaketen, die in einer bestimmten Entfernung mit einer bestimmten Art von Sensorvorrichtung erfasst und/oder beispielsweise von einem mit niedriger Ausstattung ausgestatteten anderen Kraftfahrzeug ermittelt wurden, nicht in den Bereich der übermittelten Teilkarte fallen. Die Teilkarte kann lastabhängig gewählt werden, das heißt es kann vorgesehen sein, dass bei einer hohen Kanalauslastung, die über einem vorgegebene Auslastungswert liegt, immer nur die Teilkarte übermittelt wird, wohingegen bei einer geringeren Kanalauslastung die gesamte Fahrzeugumgebungskarte übermittelt wird.

Es wird hierdurch erreicht, dass gegebenenfalls eine Untermenge der aktuellen lokalen Umgebungszustandskarte ermittelt und nur diese Untermenge, die hier als Teilkarte bezeichnet wird, den anderen Kraftfahrzeugen bereitgestellt wird. Die Teilkarte wird hierfür bevorzugt lastgesteuert, das heißt abhängig von der Auslastung eines Kommunikationsverbindungskanal der Fahrzeug-zu-Fahrzeug-Kommunikation, festgelegt. Um dennoch stets eine sinnvolle Teilkarte an die anderen Kraftfahrzeuge zu übermitteln, wird der jeweilige Zuverlässigkeitswert, der einem einzelnen Datenpaket entnommenen Daten, die zur Erzeugung der Teilkarte verwendet wurden, zugeordnet ist, berücksichtigt. Es wird also jeweils nur die besonders vertrauenswürdige Teilkarte des Kraftfahrzeugs an die anderen Kraftfahrzeuge übermittelt. Hierdurch wird sichergestellt, dass durch das Empfangen der aktuellen lokalen Umgebungszustandskarte stets mit großer Wahrscheinlichkeit ein Mehrwert für das empfangende Kraftfahrzeug erreicht wird.

Zudem umfasst eine weitere Ausgestaltungsform, dass zumindest eine Teilumgebungszustandskarte der aktuellen Umgebungszustandskarte an das zumindest eine andere Kraftfahrzeug in der Umgebung des Kraftfahrzeugs übermittelt wird. Nachdem jedes Kraftfahrzeug für sich die optimale lokale Umgebungszustandskarte ermittelt, erzeugt und bereitgestellt hat, kann diese oder zumindest eine Teilkarte davon, die sogenannte Teilumgebungszustandskarte der aktuellen Umgebungszustandskarte, für das jeweilige zumindest eine andere Kraftfahrzeug bereitgestellt werden. Die Teilumgebungszustandskarte wird hierbei analog zur oben beschriebenen Teilkarte der erzeugten Fahrzeugumgebungskarte abhängig von dem Zuverlässigkeitswert der der Teilumgebungszustandskarte zugrunde gelegten Daten von Datenpaketen bestimmt. Außerdem kann eine Kanalauslastung der Fahrzeug-zu-Fahrzeug-Kommunikation berücksichtigt werden.

Es wird also eine weitere Möglichkeit insbesondere vorteilhaft für ein Kraftfahrzeug mit niedriger Ausstattung an Sensoreinrichtungen der Sensorvorrichtung bereitgestellt, mittels derer dieses Kraftfahrzeug von einem höher ausgestatteten anderen Kraftfahrzeug profitieren kann, indem dem Kraftfahrzeug zumindest die Teilumgebungszustandskarte der erzeugten aktuellen lokalen Umgebungszustandskarte übermittelt wird. Jedes Kraftfahrzeug, das zumindest über eine Fahrzeug-zu-Fahrzeug-Kommunikationsschnittstelle verfügt, kann somit eine genaue und wie oben beschrieben optimierte aktuelle lokale Umgebungszustandskarte bereitgestellt bekommen und diese beispielsweise bei der Durchführung von entsprechenden Fahrzeugfunktionen berücksichtigen.

In einer zusätzlichen Ausgestaltungsform ist es vorgesehen, dass die erzeugte Fahrzeugumgebungskarte und/oder die erzeugte aktuelle lokale Umgebungszustandskarte jeweils als zumindest ein Kartendatenpaket in einem vorgegebenen Datenformat und/oder als serialisierte Kartendaten bereitgestellt wird. Es kann also beispielsweise ein eigenes Datenformat vorgesehen sein, in dem die Fahrzeugumgebungskarte und/oder die aktuelle lokale Umgebungszustandskarte abgespeichert und beispielsweise für das zumindest eine andere Kraftfahrzeug bereitgestellt werden kann. Alternativ oder zusätzlich dazu können die der Fahrzeugumgebungskarte und/oder der aktuelle lokale Umgebungszustandskarte zugrunde gelegten einzelnen Datenpakete strukturiert in eine sequentielle Darstellungsform umgewandelt und in dieser Form gespeichert werden. Die Fahrzeugumgebungskarte und/oder die aktuelle lokale Umgebungszustandskarte umfassen daher beispielsweise zunächst den Datensatz, der das Kraftfahrzeug an sich beschreibt und daran anschließend der Reihe nach die jeweiligen Datensätze für die in der Umgebung des Kraftfahrzeugs festgestellten anderen Kraftfahrzeuge. Letztendlich werden also dann die einzelnen Daten, die die einzelnen Kraftfahrzeuge innerhalb der Fahrzeugumgebungskarte und/oder der aktuellen lokalen Umgebungszustandskarte beschreiben, als aufgelistete Datenpakete bereitgestellt. Insbesondere wenn ein moderner Kommunikationskanal, wie beispielsweise eine 5G-Fahrzeug-zu-Fahrzeug-Kommunikationsverbindung, gewählt wird, können derartige große Datenpakete, die die gesamte Fahrzeugumgebungskarte und/oder aktuelle lokale Umgebungszustandskarte beschreiben können, zwischen den Kraftfahrzeugen übermittelt werden. Es kann also besonders zuverlässig sowohl die Fahrzeugumgebungskarte und/oder die erzeugte aktuelle lokale Umgebungszustandskarte des jeweiligen Kraftfahrzeugs mittels Fahrzeug-zu-Fahrzeug-Kommunikation zwischen den einzelnen Kraftfahrzeugen ausgetauscht und übermittelt werden. Dies ermöglicht eine vorteilhafte und leichte Verbreitung der jeweiligen Kartendaten. Außerdem können die übermittelten Kartendaten verschlüsselt übermittelt werden, wobei auf gängige Verschlüsselungstechniken zurückgegriffen werden kann.

Das erfindungsgemäße Kraftfahrzeug ist dazu ausgebildet, das oben beschriebene Verfahren durchzuführen. Das heißt, das Kraftfahrzeug ist dazu ausgebildet, einen aktuellen positionsrelevanten Fahrzeugparameter des Kraftfahrzeugs beschreibende Eigenfahrsituationsdaten durch Auswerten von Fahrzeugdaten des Kraftfahrzeugs zu erzeugen; Umgebungssituationsdaten, die zumindest eine aktuelle Relativanordnung zumindest eines in einer vorgegebenen Umgebung des Kraftfahrzeugs angeordneten anderen Kraftfahrzeugs zum Kraftfahrzeug beschreiben, durch Auswerten von Sensordaten einer Sensorvorrichtung des Kraftfahrzeugs zu erzeugen; die Eigenfahrsituationsdaten und die Umgebungssituationsdaten zum Erzeugen einer Fahrzeugumgebungskarte, die eine aktuelle lokale Verkehrslage in der vorgegebenen Umgebung des Kraftfahrzeugs beschreibt, auszuwerten; zumindest eine weitere Fahrzeugumgebungskarte dem jeweiligen zumindest einen anderen Kraftfahrzeug in der Umgebung des Kraftfahrzeugs zu empfangen; die zumindest eine empfangene Fahrzeugumgebungskarte mit der erzeugten Fahrzeugumgebungskarte unter Anwendung eines Kartendatenbewertungskriteriums zum Erzeugen der aktuellen lokalen Umgebungszustandskarte für das Kraftfahrzeug zu kombinieren; und die erzeugte aktuelle lokale Umgebungszustandskarte dem Kraftfahrzeug bereitzustellen. Ferner umfassen die Eigenfahrsituationsdaten und/oder die Umgebungssituationsdaten jeweils mehrere Datenpakete und jedem der mehreren Datenpakete ist ein Zuverlässigkeitswert zugeordnet, der beschreibt, wie zuverlässig Daten des Datenpakets sind. Das Kraftfahrzeug ist dazu ausgebildet, bei der Anwendung des Kartendatenbewertungskriteriums für jede empfangene Fahrzeugumgebungskarte zu überprüfen, ob zumindest einem der empfangenen Fahrzeugumgebungskarte zugrunde gelegten Datenpaket ein höherer Zuverlässigkeitswert zugeordnet ist als einem entsprechenden Datenpaket der der eigenen Fahrzeugumgebungskarte zugrunde gelegten Eigenfahrsituationsdaten und/oder Umgebungssituationsdaten, und beim Erzeugen der aktuellen lokalen Umgebungszustandskarte für das Kraftfahrzeug nur das jeweilige Datenpaket der jeweils miteinander verglichenen Datenpakete zu berücksichtigen, dem der höchste Zuverlässigkeitswert zugeordnet ist. Die im Zusammenhang mit dem erfindungsgemäßen Verfahren vorgestellten bevorzugten Ausgestaltungen und deren Vorteile gelten entsprechend, soweit anwendbar, für das erfindungsgemäße Kraftfahrzeug. Aus diesem Grund werden die entsprechenden Ausgestaltungsformen des erfindungsgemäßen Kraftfahrzeugs hier nicht noch einmal beschrieben.

Als Kraftfahrzeug ist bevorzugt ein Kraftwagen vorgesehen, insbesondere als Personenkraftwagen oder Lastkraftwagen, oder als Personenbus oder Motorrad ausgestaltet.

Das erfindungsgemäße System umfasst ein Kraftfahrzeug, wie es oben beschrieben wurde, sowie zumindest ein anderes Kraftfahrzeug aus einer Umgebung des Kraftfahrzeugs. Bei dem anderen Kraftfahrzeug handelt es sich bevorzugt ebenfalls um ein Kraftfahrzeug, wie es oben beschrieben wurde. Die im Zusammenhang mit dem erfindungsgemäßen Verfahren vorgestellten bevorzugten Ausgestaltungen und deren Vorteile gelten entsprechend, soweit anwendbar, für das erfindungsgemäße System. Aus diesem Grund werden die entsprechenden Ausgestaltungsformen des erfindungsgemäßen Systems hier nicht noch einmal beschrieben.

Zu der Erfindung gehört auch eine Steuereinheit für das Kraftfahrzeug. Die Steuereinheit weist eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Die Erfindung umfasst auch die Kombinationen der Merkmale der beschriebenen Ausführungsformen.

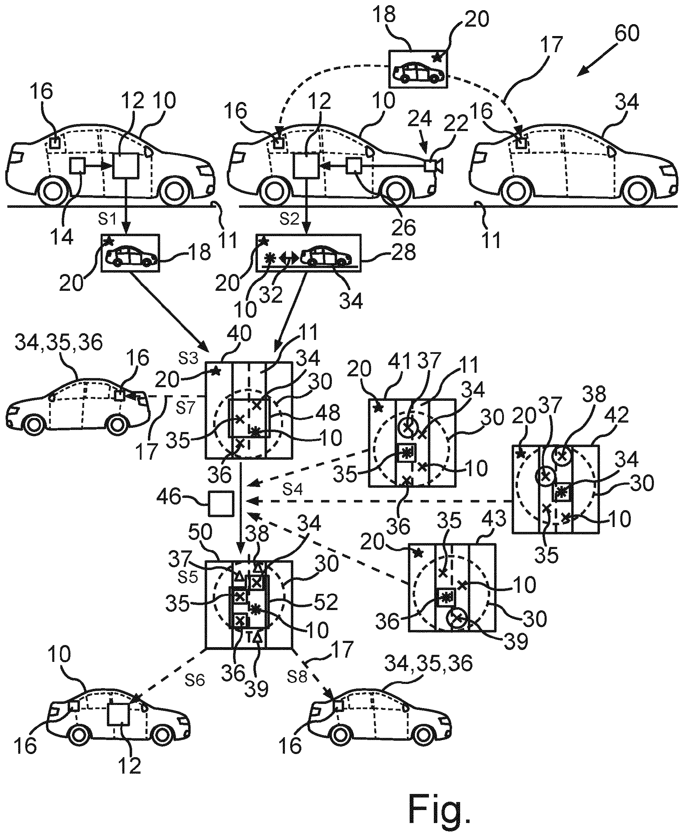

Im Folgenden ist ein Ausführungsbeispiel der Erfindung beschrieben. Hierzu zeigt die einzige Figur in schematischer Darstellung einen Signalflussgraphen für ein Verfahren zum Bereitstellen einer aktuellen lokalen Umgebungszustandskarte für ein Kraftfahrzeug.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren ist die beschriebene Ausführungsform auch durch weitere der bereits beschriebenen Merkmale der Erfindung ergänzbar.

In der Figur bezeichnen gleiche Bezugszeichen jeweils funktionsgleiche Elemente.

In der einzigen Fig. ist ein Kraftfahrzeug 10 skizziert, das dazu ausgebildet ist, mittels einer Steuereinheit 12 im Zusammenspiel mit weiteren Fahrzeugkomponenten ein Verfahren zum Bereitstellen einer aktuellen lokalen Umgebungszustandskarte 50 für das Kraftfahrzeug 10 durchzuführen. Im Kraftfahrzeug 10 sind Fahrzeugdaten 14 des Kraftfahrzeugs 10 gespeichert. Die Fahrzeugdaten 14 können in einer Speichereinheit des Kraftfahrzeugs 10 oder der Steuereinheit 12 gespeichert sein. Zudem weist das Kraftfahrzeug 10 eine Kommunikationsschnittstelle 16 auf. Das Kraftfahrzeug 10 fährt aktuell auf einer Straße 11.

In einem ersten Verfahrensschritt S1 werden Eigenfahrsituationsdaten 18 erzeugt, die einen aktuellen positionsrelevanten Fahrzeugparameter des Kraftfahrzeugs 10 beschreiben. Die Eigenfahrsituationsdaten 18 werden hierbei durch Auswerten der Fahrzeugdaten 14 des Kraftfahrzeugs 10 erzeugt. Das Auswerten kann mittels der Steuereinheit 12 erfolgen. Die Eigenfahrsituationsdaten 18 umfassen eine aktuelle Position, eine aktuelle Geschwindigkeit, eine aktuelle Fahrtrichtung auf der Straße 11, eine aktuelle Beschleunigung sowie eine aktuelle Gierrate des Kraftfahrzeugs 10. Die Eigenfahrsituationsdaten 18 umfassen somit zahlreiche fahrrelevante Parameter des Kraftfahrzeugs 10.

Auf der Straße 11 befindet sich zudem zumindest ein anderes Kraftfahrzeug 34. Das andere Kraftfahrzeug 34 befindet sich hierbei in einer vorgegebenen Umgebung 30 des Kraftfahrzeugs 10. Das Kraftfahrzeug 10 weist eine Frontkamera 22 auf, die als Sensoreinrichtung von einer Sensorvorrichtung 24 des Kraftfahrzeugs 10 umfasst wird. Die Sensorvorrichtung 24 kann zudem ein Radargerät, ein Lidar-Gerät sowie weitere Kameraeinrichtungen, wie eine Heckkamera und/oder eine Seitenkamera, umfassen. Sensordaten 26 der Frontkamera 22 als Komponente der Sensorvorrichtung 24 werden in einem Schritt S2 an die Steuereinheit 12 übermittelt, sodass durch Auswerten der Sensordaten 26 Umgebungssituationsdaten 28 erzeugt werden. Die Umgebungssituationsdaten 28 beschreiben zumindest eine aktuelle Relativanordnung 32, das heißt zumindest einen Abstand, des zumindest einen anderen Kraftfahrzeugs 34 zum Kraftfahrzeug 10.

Sowohl die Eigenfahrsituationsdaten 18 als auch die Umgebungssituationsdaten 28 weisen jeweils einen Zuverlässigkeitswert 20 auf. Denn die Eigenfahrsituationsdaten 18 sowie die Umgebungssituationsdaten 28 umfassen genau genommen typischerweise jeweils mehrere Datenpakete und jedem der mehreren Datenpakete ist jeweils ein Zuverlässigkeitswert 20 zugeordnet, der beschreibt, wie zuverlässig Daten dieses Datenpakets sind. Im Fall der Umgebungssituationsdaten 28 wird hierbei beispielsweise eine Zuverlässigkeit der Frontkamera 22 als Komponente der Sensorvorrichtung 24 hinsichtlich ihrer Zuverlässigkeit bewertet. Analog dazu wird im Rahmen der Eigenfahrsituationsdaten 18 beispielsweise eine Zuverlässigkeit der Fahrzeugdaten 14 berücksichtigt, die beispielsweise einen besonders hohen Zuverlässigkeitswert 20 für die Positionsbestimmung des Kraftfahrzeugs 10 aufweisen, jedoch einen verglichen damit niedrigen Zuverlässigkeitswert 20 für einen Geschwindigkeitswert der aktuellen Geschwindigkeit des Kraftfahrzeugs 10 aufweisen.

Zum Erzeugen der Umgebungssituationsdaten 28 werden zusätzlich von dem zumindest einen anderen Kraftfahrzeug 34 empfangene Eigenfahrsituationsdaten 18 des anderen Kraftfahrzeugs 34 vom Kraftfahrzeug 10 ausgewertet. Die Übermittlung der Eigenfahrsituationsdaten 18 des anderen Kraftfahrzeugs 34 erfolgt hierbei über eine Fahrzeug-zu-Fahrzeug-Kommunikationsverbindung 17 zwischen der Kommunikationsschnittstelle 16 des anderen Kraftfahrzeugs 34 und der Kommunikationsschnittstelle 16 des Kraftfahrzeugs 10.

In einem Schritt S3 erfolgt daraufhin ein Auswerten der Eigenfahrsituationsdaten 18 und der Umgebungssituationsdaten 28 zum Erzeugen einer Fahrzeugumgebungskarte 40, die eine aktuelle lokale Verkehrslage der vorgegebenen Umgebung 30 des Kraftfahrzeugs 10 beschreibt. Wie hier skizziert, befinden sich auf der Straße 11 in der Umgebung 30 des Kraftfahrzeugs 10 insgesamt drei andere Kraftfahrzeuge 34, 35, 36. Das Kraftfahrzeug 10 ist hierbei auf der Fahrzeugumgebungskarte 40 mithilfe eines Sterns markiert, wohingegen die anderen Kraftfahrzeuge 34, 35, 36 jeweils mit einem Kreuz markiert sind. Die drei anderen Kraftfahrzeuge 34, 35, 36 können hierbei von der Sensorvorrichtung 24, die unter anderem die Frontkamera 22 umfasst, festgestellt und in der Umgebung 30 des Kraftfahrzeugs 10 zumindest basierend auf ihrer Relativanordnung 32 zum Kraftfahrzeug 10 positioniert werden. Eine Grenzlinie der Umgebung 30 ist in der skizzierten erzeugten Fahrzeugumgebungskarte 40 mittels einer gestrichelten Linie skizziert.

In einem nächsten Schritt S4 erfolgt ein Empfangen von zumindest einer weiteren Fahrzeugumgebungskarte 41, 42, 43 von dem jeweiligen zumindest einen anderen Kraftfahrzeug 34, 35, 36 in der Umgebung 30 des Kraftfahrzeugs 10. Hier werden drei weitere Fahrzeugumgebungskarten 41, 42, 43 empfangen, und zwar die Fahrzeugumgebungskarte 41 des anderen Kraftfahrzeugs 35, die Fahrzeugumgebungskarte 42 des anderen Kraftfahrzeugs 34 sowie die Fahrzeugumgebungskarte 43 des anderen Kraftfahrzeugs 36. In jeder dieser empfangenen Fahrzeugumgebungskarten 41, 42, 43 ist jeweils das Kraftfahrzeug 34, 35, 36, das die entsprechende Fahrzeugumgebungskarte 41, 42, 43 bereitstellt, mit einem Sternchen markiert.

Hier wird nun deutlich, dass in den insgesamt drei weiteren Fahrzeugumgebungskarten 41, 42, 43 insgesamt drei zusätzliche Kraftfahrzeuge 37, 38, 39 vermerkt sind, die in der vom Kraftfahrzeug 10 erzeugten Fahrzeugumgebungskarte 40 nicht vermerkt sind. Der Grund hierfür ist, dass diese zusätzlichen Kraftfahrzeuge 37, 38, 39 beispielsweise mithilfe der jeweiligen Umgebungssituationsdaten 28 der weiteren Kraftfahrzeuge 34, 35, 36 erfasst werden, jedoch nicht von der Sensorvorrichtung 24 des Kraftfahrzeugs 10, und zudem nicht in Form von empfangenen Eigenfahrsituationsdaten 18 vorliegen. Diese drei zusätzlichen Kraftfahrzeuge 37, 38, 39 sind in den jeweiligen empfangenen Fahrzeugumgebungskarten 41, 42 43 jeweils umkreist und dadurch besonders hervorgehoben skizziert. Zudem sind in den drei empfangenen Fahrzeugumgebungskarten 41, 42, 43 jeweils die die jeweilige Fahrzeugumgebungskarte 41, 42, 43 bereitstellenden anderen Kraftfahrzeuge 35, 34, 36 mithilfe eines Kästchens markiert. Dies symbolisiert, dass die Daten der entsprechenden Datenpakete, die diesen Positionen innerhalb der jeweiligen Fahrzeugumgebungskarte 41, 42, 43 zugrunde liegen, einen besonders hohen Zuverlässigkeitswert 20 aufweisen. Als Umgebung 30 ist in den weiteren Fahrzeugumgebungskarten 41, 42, 43 jeweils die Umgebung 30 des die entsprechende Fahrzeugumgebungskarte 41, 42, 43 bereitstellenden anderen Kraftfahrzeugs 34, 35, 36 skizziert.

In einem Schritt S5 erfolgt ein Kombinieren der zumindest einen empfangenen Fahrzeugumgebungskarte 41, 42, 43 mit der erzeugten Fahrzeugumgebungskarte 40. Dies erfolgt unter Anwendung eines Kartendatenbewertungskriteriums 46, das in der Steuereinheit 12 bereitgestellt sein kann. Durch dieses Kombinieren wird eine aktuelle lokale Umgebungszustandskarte 50 für das Kraftfahrzeug 10 erzeugt. Hier werden die drei weiteren Fahrzeugumgebungskarten 41, 42, 43 mit der eigenen Fahrzeugumgebungskarte 40 kombiniert. Durch Anwendung des Kartendatenbewertungskriteriums 46 wird hierbei zum einen überprüft, ob ein jeweiliges von der empfangenen Fahrzeugumgebungskarte 41, 42, 43 beschriebenes Kraftfahrzeug 10, 34, 35, 36, 37, 38, 39 ebenfalls von der erzeugten Fahrzeugumgebungskarte 40 beschrieben wird. Falls in der jeweiligen empfangenen Fahrzeugumgebungskarte 41, 42, 43 zumindest ein zusätzliches Kraftfahrzeug 37, 38, 39 beschrieben wird, das in der eigenen erzeugten Fahrzeugumgebungskarte 40 fehlt, wird dieses zusätzliche Kraftfahrzeug 37, 38, 39 in die erzeugte aktuelle lokale Umgebungszustandskarte 50 aufgenommen. Diese drei hier neu aufgenommenen zusätzlichen Kraftfahrzeuge 37, 38, 39 sind in der erzeugten aktuellen lokalen Umgebungszustandskarte 50 mithilfe von Dreiecken hervorgehoben. Dem Kraftfahrzeug 10 liegen nun also Daten beziehungsweise Informationen zu drei zusätzlichen Kraftfahrzeugen 37, 38, 39 aufgrund der empfangenen Fahrzeugumgebungskarten 41, 42, 43 vor.

Außerdem wird bei der Anwendung des Kartendatenbewertungskriteriums 46 für jede empfangene Fahrzeugumgebungskarte 41, 42, 43 überprüft, ob zumindest einem der empfangenen Fahrzeugumgebungskarten 41, 42, 43 zugrunde gelegten Datenpaket ein höherer Zuverlässigkeitswert 20 zugeordnet ist als einem entsprechenden Datenpaket der der eigenen Fahrzeugumgebungskarte 40 zugrunde gelegten Eigenfahrsituationsdaten 18 und/oder Umgebungssituationsdaten 28. Beim Erzeugen der aktuellen lokalen Umgebungszustandskarte 50 durch das Kraftfahrzeug 10 wird allerdings nur das jeweilige Datenpaket der jeweils miteinander verglichenen Datenpakete berücksichtigt, dem der höchste Zuverlässigkeitswert 20 zugeordnet ist. Hier werden daher die jeweils mit einem besonders hohen Zuverlässigkeitswert 20 bewerteten Daten zu den anderen Kraftfahrzeugen 34, 35, 36 der aktuellen Umgebungszustandskarte 50 zugrunde gelegt und nicht die entsprechenden Daten zu den anderen Kraftfahrzeugen 34, 35, 36, die von den Umgebungssituationsdaten 28 umfasst werden. Dies ist in der skizzierten aktuellen lokalen Umgebungszustandskarte 50 durch die Kästchen um die Positionen der drei anderen Kraftfahrzeuge 34, 35, 36 herum verdeutlicht.

In einem nächsten Schritt S6 wird die aktuelle lokale Umgebungszustandskarte 50 im Kraftfahrzeug 10, das heißt hier in der Steuereinheit 12, für das Kraftfahrzeug 10 bereitgestellt. Nun können beispielsweise einzelne Fahrerassistenzsysteme des Kraftfahrzeugs 10 bei beispielsweise einer Routenplanung oder einer Planung von Steuerbefehlen auf die aktuelle lokale Umgebungszustandskarte 50 zugreifen.

Insbesondere bei einer relativ hohen Kanalauslastung der Fahrzeug-zu-Fahrzeug-Kommunikationsverbindung 17 in der Umgebung 30 mit zahlreichen Kraftfahrzeugen 10, 34, 35, 36, 37, 38, 39 wird zudem eine Teilkarte 48 der erzeugten Fahrzeugumgebungskarte 40 erzeugt, wobei dieser Teilkarte 48 nur Daten von Datenpaketen zugrunde gelegt sind, deren jeweiliger Zuverlässigkeitswert 20 größer als ein vorgegebener Minimalzuverlässigkeitswert ist, also die als besonders zuverlässig im Vergleich zu anderen Daten von Datenpaketen bewertet werden. Zumindest diese Teilkarte 48, jedoch kanalauslastungsabhängig gegebenenfalls sogar die gesamte erzeugte Fahrzeugumgebungskarte 40, wird dann in einem Schritt S7 an die anderen Kraftfahrzeuge 34, 35, 36 in der Umgebung 30 des Kraftfahrzeugs 10 übermittelt, und zwar über die jeweilige Fahrzeug-zu-Fahrzeug-Kommunikationsverbindung 17.

Analog dazu wird zumindest eine Teilumgebungszustandskarte 52 der aktuellen lokalen Umgebungszustandskarte 50 erzeugt und über die Fahrzeug-zu-Fahrzeug-Kommunikationsverbindung 17 für die anderen Kraftfahrzeuge 34, 35, 36 innerhalb eines Kommunikationsradius um das Kraftfahrzeug 10 herum in einem Schritt S8 übermittelt. Hierbei kann jedoch gegebenenfalls auch die gesamte Umgebungszustandskarte 50 übermittelt werden.

Die erzeugte Fahrzeugumgebungskarte 40 und/oder die aktuelle lokale Umgebungszustandskarte 50 werden als zumindest ein Umgebungszustandskartenpaket in einem vorgegebenen Datenformat und/oder als serialisierte Kartendaten bereitgestellt.

Das Kraftfahrzeug 10 sowie die anderen Kraftfahrzeuge 34, 35, 36 in der Umgebung 30 des Kraftfahrzeugs 10 bilden zusammen ein System 60, das dazu ausgebildet ist, das oben beschriebene Verfahren durchzuführen.

Falls die jeweiligen miteinander verglichenen Datenpakete einen jeweiligen Zuverlässigkeitswert 20 aufweisen, der in einem vorgegebenen Zuverlässigkeitswertbereich liegt, und die Daten der miteinander verglichenen Datenpakete jeweils zumindest mittelbar von einer vorgegebenen Sensoreinrichtung der jeweiligen Sensorvorrichtung 24 des jeweiligen Kraftfahrzeugs 10, 34, 35, 36 bereitgestellt wurden, wird überprüft, ob die Daten der jeweiligen Datenpakete innerhalb eines vorgegebenen Abweichungsbereichs übereinstimmen. Falls die Daten der jeweiligen Datenpakete nicht innerhalb des vorgegebenen Abweichungsbereichs übereinstimmen, wird eine Messgenauigkeitsüberprüfungsroutine für die vorgegebene Sensoreinrichtung des Kraftfahrzeugs 10 aktiviert, da dies darauf hindeutet, dass eventuell die Sensoreinrichtung nicht ausreichend genau misst, beispielsweise aufgrund von Dreck oder Verunreinigungen und/oder einer Positionsveränderung der entsprechenden Sensoreinrichtung der Sensorvorrichtung 24.

Insgesamt zeigen die Beispiele eine kooperative Local Dynamic Map, das heißt eine miteinander teilbare Fahrzeugumgebungskarte 40 sowie eine aus mehreren Fahrzeugumgebungskarten 40, 41, 42, 43 bereitgestellte verbesserte aktuelle lokale Umgebungszustandskarte 50. Das als Konzept der Basic Safety Message bekannte Konzept des Erzeugens der Fahrzeugumgebungskarte 40 wird dabei derart erweitert, dass das Kraftfahrzeug 10 nicht nur Informationen über sich selbst an Verkehrsteilnehmer in der Umgebung 30, das heißt an andere Kraftfahrzeuge 34, 35, 36 aussendet, sondern auch vollständige Fahrzeugumgebungskarten 40 mit diesen austauscht. Dies erfolgt über die Fahrzeug-zu-Fahrzeug-Kommunikationsverbindung 17.

Die Umsetzung hierfür kann durch Abspeichern der einzelnen Fahrzeugumgebungskarten 40 der einzelnen Kraftfahrzeuge 10, 34, 35, 36 als eine neue Nachricht, die beispielsweise in einem besonderen Datenformat formatiert ist, erfolgen. Hierdurch steigt die Kanalauslastung der Fahrzeug-zu-Fahrzeug-Kommunikationsverbindungen 17 um maximal einen linearen Faktor, der von der Anzahl der Fahrzeug-zu-Fahrzeug-Kommunikationsverbindungen 17 abhängt. Insbesondere mit modernen Kommunikationsmöglichkeiten wie beispielsweise dem 5G-Fahrzeug-zu-Infrastruktur-Standard ist dies umsetzbar. Es wird darauf hingewiesen, dass die Anzahl der übertragenen Fahrzeug-zu-Fahrzeug-Kommunikationsverbindungen 17, also das heißt die über die Fahrzeug-zu-Fahrzeug-Kommunikationsverbindungen 17 ermittelten Daten, nur eine Untermenge der in der Fahrzeugumgebungskarte 40 und/oder der aktuellen lokalen Umgebungszustandskarte 50 vorhandenen Daten sein kann, das heißt es kann nur die Teilkarte 48 und/oder die Teilumgebungszustandskarte 52 übermittelt werden. Dies kann lastgesteuert von den einzelnen Kraftfahrzeugen 10, 34, 35, 36 umgesetzt werden. Je nach Auslastung der Fahrzeug-zu-Fahrzeug-Kommunikationskanäle kann somit entweder die gesamte Fahrzeugumgebungskarte 40 oder die Teilkarte 48 beziehungsweise die gesamte Umgebungszustandskarte 50 oder nur die Teilumgebungszustandskarte 52 an die anderen Kraftfahrzeuge 34, 35, 36 übermittelt werden.

## Patentansprüche

1. Verfahren zum Bereitstellen einer aktuellen lokalen Umgebungszustandskarte (50) für ein Kraftfahrzeug (10), umfassend folgende Schritte in dem Kraftfahrzeug (10):
- Erzeugen von einen aktuellen positionsrelevanten Fahrzeugparameter des Kraftfahrzeugs (10) beschreibenden Eigenfahrsituationsdaten (18) durch Auswerten von Fahrzeugdaten (14) des Kraftfahrzeugs (10) (S1);
- Erzeugen von Umgebungssituationsdaten (28), die zumindest eine aktuelle Relativanordnung (32) zumindest eines in einer vorgegebenen Umgebung (30) des Kraftfahrzeugs (10) angeordneten anderen Kraftfahrzeugs (34, 35, 36) zum Kraftfahrzeug (10) beschreiben, durch Auswerten von Sensordaten (26) einer Sensorvorrichtung (24) des Kraftfahrzeugs (10) (S2);
- Auswerten der Eigenfahrsituationsdaten (18) und der Umgebungssituationsdaten (28) zum Erzeugen einer Fahrzeugumgebungskarte (40), die eine aktuelle lokale Verkehrslage in der vorgegebenen Umgebung (30) des Kraftfahrzeugs (10) beschreibt (S3);
- Empfangen von zumindest einer weiteren Fahrzeugumgebungskarte (41, 42, 43) von dem jeweiligen zumindest einen anderen Kraftfahrzeug (34, 35, 36) in der Umgebung (30) des Kraftfahrzeugs (10) (S4);
- Kombinieren der zumindest einen empfangenen Fahrzeugumgebungskarte (41, 42, 43) mit der erzeugten Fahrzeugumgebungskarte (40) unter Anwendung eines Kartendatenbewertungskriteriums (46) zum Erzeugen der aktuellen lokalen Umgebungszustandskarte (50) für das Kraftfahrzeug (10) (S5);
- Bereitstellen der erzeugten aktuellen lokalen Umgebungszustandskarte (50) im Kraftfahrzeug (10) (S6),
wobei bei der Anwendung des Kartendatenbewertungskriteriums (46) überprüft wird, ob ein jeweiliges von der empfangenen Fahrzeugumgebungskarte (41, 42, 43) beschriebenes Kraftfahrzeug (10, 34, 35, 36, 37, 38, 39) ebenfalls von der erzeugten Fahrzeugumgebungskarte (40) beschrieben wird, und, falls in der jeweiligen empfangenen Fahrzeugumgebungskarte (41, 42, 43) zumindest ein zusätzliches Kraftfahrzeug (37, 38, 39) beschrieben wird, das in der eigenen Fahrzeugumgebungskarte (40) fehlt, das zumindest eine zusätzliche Kraftfahrzeug (37, 38, 39) in die erzeugte aktuelle lokale Umgebungszustandskarte (50) aufgenommen wird, wobei die Eigenfahrsituationsdaten (18) und/oder die Umgebungssituationsdaten (28) jeweils mehrere Datenpakete umfassen und jedem der mehreren Datenpakete ein Zuverlässigkeitswert (20) zugeordnet ist, der beschreibt, wie zuverlässig Daten des Datenpakets sind, wobei bei der Anwendung des Kartendatenbewertungskriteriums (46) für jede empfangene Fahrzeugumgebungskarte (41, 42, 43) überprüft wird, ob zumindest einem der empfangenen Fahrzeugumgebungskarte (41, 42, 43) zugrunde gelegten Datenpaket ein höherer Zuverlässigkeitswert (20) zugeordnet ist als einem entsprechenden Datenpaket der der eigenen Fahrzeugumgebungskarte (40) zugrunde gelegten Eigenfahrsituationsdaten (18) und/oder Umgebungssituationsdaten (28), und beim Erzeugen der aktuellen lokalen Umgebungszustandskarte (50) für das Kraftfahrzeug (10) nur das jeweilige Datenpaket der jeweils miteinander verglichenen Datenpakete berücksichtigt wird, dem der höchste Zuverlässigkeitswert (20) zugeordnet ist.

2. Verfahren nach dem vorhergehenden Anspruch, wobei zum Erzeugen der Umgebungssituationsdaten (28) von zumindest einem anderen Kraftfahrzeug (34, 35, 36) in der Umgebung (30) des Kraftfahrzeugs (10) empfangene Eigenfahrsituationsdaten (18) des anderen Kraftfahrzeugs (10) ausgewertet werden (S2).

3. Verfahren nach einem der vorhergehenden Ansprüche, wobei, falls jeweilige miteinander verglichene Datenpakete einen jeweiligen Zuverlässigkeitswert (20) aufweisen, der in einem vorgegebenen Zuverlässigkeitswertbereich liegt, und die Daten der miteinander verglichenen Datenpakete jeweils zumindest mittelbar von einer vorgegebenen Sensoreinrichtung der jeweiligen Sensorvorrichtung (24) des jeweiligen Kraftfahrzeugs (10, 34, 35, 36) bereitgestellt wurden, überprüft wird, ob die Daten der jeweiligen Datenpakete innerhalb eines vorgegebenen Abweichungsbereichs übereinstimmen, und, falls die Daten der jeweiligen verglichenen Datenpakete nicht innerhalb des vorgegebenen Abweichungsbereichs übereinstimmen, eine Messgenauigkeitsüberprüfungsroutine für die vorgegebene Sensoreinrichtung des Kraftfahrzeugs (10) aktiviert wird.

4. Verfahren nach einem der vorhergehenden Ansprüche, wobei zumindest eine Teilkarte (48) der erzeugten Fahrzeugumgebungskarte (40) an das zumindest eine andere Kraftfahrzeug (34, 35, 36) in der Umgebung (30) des Kraftfahrzeugs (10) übermittelt wird, wobei dieser Teilkarte (48) nur Daten von Datenpaketen zugrunde gelegt sind, deren jeweiliger Zuverlässigkeitswert (20) größer als ein vorgegebener Minimalzuverlässigkeitswert ist (S7).

5. Verfahren nach einem der vorhergehenden Ansprüche, wobei zumindest eine Teilumgebungszustandskarte (52) der bereitgestellten aktuellen lokalen Umgebungszustandskarte (50) an das zumindest eine andere Kraftfahrzeug (34, 35, 36) in der Umgebung (30) des Kraftfahrzeugs (10) übermittelt wird (S8).

6. Verfahren nach einem der vorhergehenden Ansprüche, wobei die erzeugte Fahrzeugumgebungskarte (50) und/oder die erzeugte aktuelle lokale Umgebungszustandskarte (50) jeweils als zumindest ein Kartendatenpaket in einem vorgegebenen Datenformat und/oder als serialisierte Kartendaten bereitgestellt wird.

7. Kraftfahrzeug (10), das dazu ausgebildet ist,
- einen aktuellen positionsrelevanten Fahrzeugparameter des Kraftfahrzeugs (10) beschreibende Eigenfahrsituationsdaten (18) durch Auswerten von Fahrzeugdaten (14) des Kraftfahrzeugs (10) zu erzeugen;
- Umgebungssituationsdaten (28), die zumindest eine aktuelle Relativanordnung (32) zumindest eines in einer vorgegebenen Umgebung (30) des Kraftfahrzeugs (10) angeordneten anderen Kraftfahrzeugs (34, 35, 36) zum Kraftfahrzeug (10) beschreiben, durch Auswerten von Sensordaten (26) einer Sensorvorrichtung (24) des Kraftfahrzeugs (10) zu erzeugen;
- die Eigenfahrsituationsdaten (18) und die Umgebungssituationsdaten (28) zum Erzeugen einer Fahrzeugumgebungskarte (40), die eine aktuelle lokale Verkehrslage in der vorgegebenen Umgebung (30) des Kraftfahrzeugs (10) beschreibt, auszuwerten;
- zumindest eine weitere Fahrzeugumgebungskarte (41, 42, 43) von dem jeweiligen zumindest einen anderen Kraftfahrzeug (34, 35, 36) in der Umgebung (40) des Kraftfahrzeugs (10) zu empfangen;
- die zumindest eine empfangene Fahrzeugumgebungskarte (41, 42, 43) mit der erzeugten Fahrzeugumgebungskarte (40) unter Anwendung eines Kartendatenbewertungskriteriums (46) zum Erzeugen der aktuellen lokalen Umgebungszustandskarte (50) für das Kraftfahrzeug (10) zu kombinieren; und
- die erzeugte aktuelle lokale Umgebungszustandskarte (50) im Kraftfahrzeug (1) bereitzustellen,
wobei das Kraftfahrzeug (10) dazu ausgebildet ist, bei der Anwendung des Kartendatenbewertungskriteriums (46) zu überprüfen, ob ein jeweiliges von der empfangenen Fahrzeugumgebungskarte (41, 42, 43) beschriebenes Kraftfahrzeug (10, 34, 35, 36, 37, 38, 39) ebenfalls von der erzeugten Fahrzeugumgebungskarte (40) beschrieben wird, und, falls in der jeweiligen empfangenen Fahrzeugumgebungskarte (41, 42, 43) zumindest ein zusätzliches Kraftfahrzeug (37, 38, 39) beschrieben wird, das in der eigenen Fahrzeugumgebungskarte (40) fehlt, das zumindest eine zusätzliche Kraftfahrzeug (37, 38, 39) in die erzeugte aktuelle lokale Umgebungszustandskarte (50) aufzunehmen, wobei die Eigenfahrsituationsdaten (18) und/oder die Umgebungssituationsdaten (28) jeweils mehrere Datenpakete umfassen und jedem der mehreren Datenpakete ein Zuverlässigkeitswert (20) zugeordnet ist, der beschreibt, wie zuverlässig Daten des Datenpakets sind, wobei das Kraftfahrzeug (10) dazu ausgebildet ist, bei der Anwendung des Kartendatenbewertungskriteriums (46) für jede empfangene Fahrzeugumgebungskarte (41, 42, 43) zu überprüfen, ob zumindest einem der empfangenen Fahrzeugumgebungskarte (41, 42, 43) zugrunde gelegten Datenpaket ein höherer Zuverlässigkeitswert (20) zugeordnet ist als einem entsprechenden Datenpaket der der eigenen Fahrzeugumgebungskarte (40) zugrunde gelegten Eigenfahrsituationsdaten (18) und/oder Umgebungssituationsdaten (28), und beim Erzeugen der aktuellen lokalen Umgebungszustandskarte (50) für das Kraftfahrzeug (10) nur das jeweilige Datenpaket der jeweils miteinander verglichenen Datenpakete zu berücksichtigen, dem der höchste Zuverlässigkeitswert (20) zugeordnet ist.

8. System (60) umfassend ein Kraftfahrzeug (10) sowie zumindest ein anderes Kraftfahrzeug (34, 35, 36) in einer Umgebung (30) des Kraftfahrzeugs (10), wobei das Kraftfahrzeug (10) nach dem vorhergehenden Anspruch ausgebildet ist.

## Claims

1. A method for providing a current local environmental state map (50) for a motor vehicle (10), comprising the following steps in the motor vehicle (10):
- generating own driving situation data (18) describing a current position-relevant vehicle parameter of the motor vehicle (10) by evaluating vehicle data (14) of the motor vehicle (10) (S1);
- generating environmental situation data (28), which describes at least one current relative arrangement (32) of at least one different motor vehicle (34, 35, 36) arranged in a preset environment (30) of the motor vehicle (10) to the motor vehicle (10), by evaluating sensor data (26) of a sensor device (24) of the motor vehicle (10) (S2);
- evaluating the own driving situation data (18) and the environmental situation data (28) for generating a vehicle environmental map (40), which describes a current local traffic situation in the preset environment (30) of the motor vehicle (10) (S3);
- receiving at least one further vehicle environmental map (41, 42, 43) from the respective at least one different motor vehicle (34, 35, 36) in the environment (30) of the motor vehicle (10) (S4);
- combining the at least one received vehicle environmental map (41, 42, 43) with the generated vehicle environmental map (40) with application of a map data evaluation criterion (46) for generating the current local environmental state map (50) for the motor vehicle (10) (S5);
- providing the generated current local environmental state map (50) in the motor vehicle (10) (S6),
wherein, upon application of the map data evaluation criterion (46), it is examined if a respective motor vehicle (10, 34, 35, 36, 37, 38, 39) described by the received vehicle environmental map (41, 42, 43) is also described by the generated vehicle environmental map (40), and if at least one additional motor vehicle (37, 38, 39) is described in the respective received vehicle environmental map (41, 42, 43), which is absent in the own vehicle environmental map (40), the at least one additional motor vehicle (37, 38, 39) is incorporated in the generated current local environmental state map (50), wherein the own driving situation data (18) and/or the environmental situation data (28) each include multiple data packets and a reliability value (20) is associated with each of the multiple data packets, which describes, how reliable data of the data packet is, wherein upon application of the map data evaluation criterion (46), it is examined for each received vehicle environmental map (41, 42, 43) if a higher reliability value (20) is associated with at least one data packet underlying the received vehicle environmental map (41, 42, 43) than with a corresponding data packet of the own driving situation data (18) and/or environmental situation data (28) underlying the own vehicle environmental map (40), and in generating the current local environmental state map (50) for the motor vehicle (10), only the respective data packet of the data packets respectively compared to each other, with which the highest reliability value (20) is associated, is considered.

2. The method according to the preceding claim, wherein for generating the environmental situation data (28), own driving situation data (18) of at least one different motor vehicle (10) received from the different motor vehicle (34, 35, 36) in the environment (30) of the motor vehicle (10) is evaluated (S2).

3. The method according to any one of the preceding claims, wherein if respective data packets compared to each other have a respective reliability value (20), which is in a preset reliability range of values, and the data of the data packets compared to each other each has been provided at least indirectly by a preset sensor entity of the respective sensor device (24) of the respective motor vehicle (10, 34, 35, 36), it is examined if the data of the respective data packets match with each other within a preset deviation range, and if the data of the respective compared data packets do not match within the preset deviation range, a measurement accuracy examination routine is activated for the preset sensor entity of the motor vehicle (10).

4. The method according to any one of the preceding claims, wherein at least one partial map (48) of the generated vehicle environmental map (40) is transferred to the at least one different motor vehicle (34, 35, 36) in the environment (30) of the motor vehicle (10), wherein only data of data packets is taken as a basis for this partial map (48), the respective reliability value (20) of which is greater than a preset minimum reliability value (S7).

5. The method according to any one of the preceding claims, wherein at least one partial environmental state map (52) of the provided current local environmental state map (50) is transferred to the at least one different motor vehicle (34, 35, 36) in the environment (30) of the motor vehicle (10) (S8).

6. The method according to any one of the preceding claims, wherein the generated vehicle environmental map (50) and/or the generated current local environmental state map (50) are each provided as at least one map data packet in a preset data format and/or as serialized map data.

7. A motor vehicle (10), which is formed
- to generate own driving situation data (18) describing a current position-relevant vehicle parameter of the motor vehicle (10) by evaluating vehicle data (14) of the motor vehicle (10);
- to generate environmental situation data (28), which describes at least one current relative arrangement (32) of at least one different motor vehicle (34, 35, 36) arranged in a preset environment (30) of the motor vehicle (10) to the motor vehicle (10), by evaluating sensor data (26) of a sensor device (24) of the motor vehicle (10);
- to evaluate the own driving situation data (18) and the environmental situation data (28) for generating a vehicle environmental map (40), which describes a current local traffic situation in the preset environment (30) of the motor vehicle (10);
- to receive at least one further vehicle environmental map (41, 42, 43) from the respective at least one different motor vehicle (34, 35, 36) in the environment (40) of the motor vehicle (10);
- to combine the at least one received vehicle environmental map (41, 42, 43) with the generated vehicle environmental map (40) with application of a map data evaluation criterion (46) for generating the current local environmental state map (50) for the motor vehicle (10); and
- to provide the generated current local environmental state map (50) in the motor vehicle (1),
wherein the motor vehicle (10) is formed to examine, upon application of the map data evaluation criterion (46), if a respective motor vehicle (10, 34, 35, 36, 37, 38, 39) described by the received vehicle environmental map (41, 42, 43) is also described by the generated vehicle environmental map (40), and if at least one additional motor vehicle (37, 38, 39) is described in the respective received vehicle environmental map (41, 42, 43), which is absent in the own vehicle environmental map (40), to incorporate the at least one additional motor vehicle (37, 38, 39) in the generated current local environmental state map (50), wherein the own driving situation data (18) and/or the environmental situation data (28) each include multiple data packets and a reliability value (20) is associated with each of the multiple data packets, which describes how reliable the data of the data packet is, wherein the motor vehicle (10) is formed, upon application of the map data evaluation criterion (46), to examine for each received vehicle environmental map (41, 42, 43), if a higher reliability value (20) is associated with at least one data packet underlying the received vehicle environmental map (41, 42, 43) than with a corresponding data packet of the own driving situation data (18) and/or environmental situation data (28) underlying the own vehicle environmental map (40), and in generating the current local environmental state map (50) for the motor vehicle (10), to consider only the respective data packet of the data packets respectively compared to each other, with which the highest reliability value (20) is associated.

8. A system (60) comprising a motor vehicle (10) as well as at least one different motor vehicle (34, 35, 36) in an environment (30) of the motor vehicle (10), wherein the motor vehicle (10) is formed according to the preceding claim.

## Revendications

1. Procédé permettant de fournir une carte d'état d'environnement (50) locale instantanée pour un véhicule à moteur (10) comportant les étapes suivantes dans le véhicule à moteur (10):
- production des données de situation de conduite intrinsèque (18) décrivant un paramètre de véhicule instantané spécifique de la position du véhicule à moteur (10) par l'exploitation des données du véhicule (14) du véhicule à moteur (10) (S1);
- production des données de situation dans l'environnement (28) qui décrivent au moins un agencement relatif (32) instantané d'au moins un autre véhicule à moteur (34, 35, 36) disposé dans un environnement prédéfini (30) du véhicule à moteur (10), par rapport audit véhicule à moteur (10), par l'exploitation des données des capteurs (26) d'un dispositif capteur (24) du véhicule à moteur (10) (S2);
- exploitation des données de situation de conduite intrinsèque (18) et des données de situation dans l'environnement (28) pour produire une carte d'environnement du véhicule (40) qui décrit une position de circulation locale instantanée dans l'environnement prédéfini (30) du véhicule à moteur (10) (S3);
- réception d'au moins une autre carte d'environnement de véhicule (41, 42, 43) provenant d'au moins un autre véhicule à moteur (34, 35, 36) dans l'environnement (30) du véhicule à moteur (10) (S4);
- combinaison d'au moins une carte d'environnement du véhicule (41, 42, 43) reçue avec la carte d'environnement de véhicule (40) produite, au moyen d'un critère d'évaluation de données de cartes (46), de manière à produire la carte d'état d'environnement locale instantanée (50) pour le véhicule à moteur (10) (S5);
- mise à disposition de la carte d'état d'environnement (50) locale instantanée produite dans le véhicule (10) (S6),
dans lequel, lors de l'application du critère d'évaluation de données de cartes (46), il est vérifié si un véhicule à moteur (10, 34, 35, 36, 37, 38, 39) respectif décrit par la carte d'environnement du véhicule (41, 42, 43) reçue est également décrit par la carte d'environnement du véhicule (40) produite, et, si dans la carte d'environnement du véhicule (40) respectif reçue au moins un véhicule à moteur (37, 38, 39) supplémentaire est décrit, qui manque dans la propre carte d'environnement du véhicule (40), l'au moins un véhicule à moteur (37, 38, 39,) supplémentaire est intégré dans la carte d'état d'environnement (50) locale instantanée produite, dans lequel les données de situation de conduite intrinsèque (18) et/ou les données de situation dans l'environnement (28) comportent respectivement plusieurs paquets de données, et un niveau de fiabilité (20) est associé à chacun des plusieurs paquets de données qui décrit le niveau de fiabilité (20) des données du paquet de données, dans lequel, lors de l'application du critère d'évaluation de données de cartes (46) pour chaque carte d'environnement du véhicule (41, 42, 43) reçue il est vérifié, si un niveau de fiabilité (20) supérieur est associé à au moins un paquet de données, qui est la base pour la carte d'environnement du véhicule (40) reçue, qu'à un paquet de données respectif des données de situation de conduite intrinsèque (18) et/ou des données de situation dans l'environnement (28) qui est la base pour la propre carte d'environnement du véhicule (40), et lors de la production de la carte d'état d'environnement (50) locale instantanée pour le véhicule à moteur (10) seulement le paquet de données respectif des paquets de données comparés entre eux est considéré auquel le niveau de fiabilité (20) le plus élevé est attribué.

2. Procédé selon la revendication précédente, dans lequel, pour la production des données de situation dans l'environnement (28), des données de situation de conduite intrinsèque (18) de l'autre véhicule à moteur (10) reçues de l'au moins un autre véhicule à moteur (34, 35, 36) dans l'environnement (30) du véhicule à moteur (10) sont évaluées.

3. Procédé selon l'une quelconque des revendications précédentes, dans lequel, si des paquets de données comparés entre eux montrent un niveau de fiabilité (20) respectif situé dans une plage de niveau de fiabilité (20) prédéfini, est les données des paquets de données comparés entre eux ont été fourni respectivement au moins indirectement par un moyen capteur prédéterminé du dispositif capteur (24) respectif du véhicule à moteur (10, 34 35, 36) respectif, il est vérifié si les données des paquets de données respectifs sont identiques dans une plage d'écart prédéfinie, et si les données des paquets de données comparés ne sont pas identiques dans la plage d'écart prédéfinie, une routine de contrôlé de la précision de mesure pour le moyen capteur prédéterminé du véhicule à moteur (10) est activée.

4. Procédé selon l'une quelconque des revendications précédentes, dans lequel au moins une carte partielle (48) de la carte d'environnement du véhicule (40) produite est transmise à l'au moins un autre véhicule à moteur (34, 35, 36) dans l'environnement (30) du véhicule à moteur (10), dans lequel cette carte partielle (48) est uniquement basée sur des données des paquets de données dont le niveau de fiabilité (20) respectif est supérieur à un niveau de fiabilité minimum prédéfini (S7).

5. Procédé selon l'une quelconque des revendications précédentes, dans lequel au moins une carte partielle d'état d'environnement (52) de la carte d'état d'environnement (50) locale instantanée fournie est transmise à l'au moins un autre véhicule à moteur (34, 35, 36) dans l'environnement (30) du véhicule à moteur (10) (S8).

6. Procédé selon l'une quelconque des revendications précédentes, dans lequel la carte d'état d'environnement (50) produite et/ou la carte d'état d'environnement (50) locale instantanée produite est fournie respectivement en tant qu'au moins un paquet de données de cartes dans un format de données prédéfini et/ou en tant que données de cartes sérialisées.

7. Véhicule à moteur (10) qui est configuré pour
- produire des données de situation de conduite intrinsèque (18) décrivant un paramètre de véhicule instantané spécifique de la position du véhicule à moteur (10) par l'exploitation des données du véhicule (14) du véhicule à moteur (10);
- produire des données de situation dans l'environnement (28) qui décrivent au moins un agencement relatif (32) instantané d'au moins un autre véhicule à moteur (34, 35, 36) disposé dans un environnement prédéfini (30) du véhicule à moteur (10), par rapport audit véhicule à moteur (10), par l'exploitation des données des capteurs (26) d'un dispositif capteur (24) du véhicule à moteur (10);
- exploiter les données de situation de conduite intrinsèque (18) et les données de situation dans l'environnement (28) pour produire une carte d'environnement du véhicule (40) qui décrit une position de circulation locale instantanée dans l'environnement prédéfini (30) du véhicule à moteur (10);
- pour recevoir au moins une autre carte d'environnement de véhicule (41, 42, 43) provenant d'au moins un autre véhicule à moteur (34, 35, 36) dans l'environnement (30) du véhicule à moteur (10);
- pour combiner l'au moins une carte d'environnement du véhicule (41, 42, 43) reçue avec la carte d'environnement de véhicule (40) produite, au moyen d'un critère d'évaluation de données de cartes (46), de manière à produire la carte d'état d'environnement locale instantanée (50) pour le véhicule à moteur (10); et
- mettre à disposition la carte d'état d'environnement (50) locale instantanée dans le véhicule à moteur (10),
dans lequel le véhicule à moteur (10) est configuré pour vérifier, lors de l'application du critère d'évaluation de données de cartes (46), si un véhicule à moteur (10, 34, 35, 36, 37, 38, 39) respectif décrit par la carte d'environnement du véhicule (41, 42, 43) reçue est également décrit par la carte d'environnement du véhicule (40) produite, et, si dans la carte d'environnement du véhicule (41, 42, 43) respectif reçue au moins un véhicule à moteur (10) supplémentaire est décrit, qui manque dans la propre carte d'environnement du véhicule (40), intégrer l'au moins un véhicule à moteur (10) supplémentaire dans la carte d'état d'environnement (50) locale instantanée produite, dans lequel les données de situation de conduite intrinsèque (18) et/ou les données de situation dans l'environnement (28) comportent respectivement plusieurs paquets de données, et un niveau de fiabilité (20) est associé à chacun des plusieurs paquets de données qui décrit le niveau de fiabilité (20) des données du paquet de données, dans lequel le véhicule à moteur (10) est configuré pour vérifier lors de l'application du critère d'évaluation de données de cartes (46) pour chaque carte d'environnement du véhicule (41, 42, 43) reçue si un niveau de fiabilité (20) supérieur est associé à au moins un paquet de données, qui est la base pour la carte d'environnement du véhicule (40) reçue, qu'à un paquet de données respectif des données de situation de conduite intrinsèque (18) et/ou des données de situation dans l'environnement (28) qui est la base pour la propre carte d'environnement du véhicule (40), et de considérer lors de la production de la carte d'état d'environnement (50) locale instantanée pour le véhicule à moteur (10) seulement le paquet de données respectif des paquets de données comparés entre eux auquel le niveau de fiabilité (20) le plus élevé est attribué.

8. Système (60) comportant un véhicule à moteur (10) ainsi qu'au moins un autre véhicule à moteur (34, 35, 36) dans un environnement (30) du véhicule à moteur (10), dans lequel le véhicule à moteur (10) est configuré selon la revendication précédente.
